# EUROPEAN PATENT APPLICATION

(11) **EP 2 105 836 A1**
(43) Date of publication of application: **30.09.2009**
(21) Application number: 08153242.6
(22) Date of filing: 25.03.2008
(51) Int. Cl.: G06F 11/14, G06F 21/00

(54) **Archive system storing archive data from a computer-based information system and method of operating such a system**

(71) Applicant: FilterWorks B.V., 2132 LR Hoofddorp (NL)
(72) Inventor: Lucas, Maurits Pieter Johan, 2492 LB, Den Haag (NL); Scherpenhuijsen, Pieter Christiaan, 3571 BE, Utrecht (NL); van Gool, Patrick Simon, 1064 NS Amsterdam (NL)
(74) Representative: Ketelaars, Maarten F.J.M.

(57) **Abstract**

An archive system with a processor (1) and a memory (5; 7; 9; 11). The memory (5; 7; 9; 11) stores one or more software components and archive data relating to data stored in a computer-based information system which has an Identity Management System and a Security Management System. The Security Management System enforces access rights of individual persons and groups of persons to the data stored in the computer-based information system and the Identity Management System stores said access rights, identification data identifying the individual persons and groups of persons and relation data regarding relations between said individual persons and said groups of persons and said data. The system performs the following actions:
• receiving the data from the computer-based information system;
• storing the data as archive data in the memory, and
• synchronizing the state of archive data in the archive system with state over time of the access rights, identification data and relation data in the Identity Management System in accordance with synchronization data received from the Identity Management System.

## Description

### Field of the invention

This patent covers a methodology and technology by way of an archive system arranged to archive relevant information from an Identity Management System over time, together with the overall traditional archive of a computer-based Information System. It is then possible to enforce access restrictions while accessing the archives, and comply with regulations such as privacy regulations and compliancy regulations.

### Background of the invention

In a computer-based information system Data Objects are stored and manipulated. Based on attributes and other criteria relationships with Persons and Groups are maintained. Access rights are assigned and enforced based on these relationships. Details concerning the Persons, Groups, Access Rights and Relations to Data Objects are stored in the Identity Management System, the access rights are enforced by the Security Management System. For example, in the case of email-boxes each email-box is related to one Person or Group (its owner) and typically only this Person or Group is allowed to access the content of the email-box. Other examples of Data Objects are Files, electronically stored voice-mails and Instant-Messages.

The computer-based information system is in constant flux over time. Data Objects change, as do User and Group information and access rights. To facilitate regulations and to prepare for data-loss due to catastrophes, regular backups of Data Objects are made in Archives.

It may be desirable, for various reasons, to grant Users access to Archives to allow them to search for, retrieve, modify or remove Data Objects contained therein.

This access will often be limited to a subset of the Data Objects contained in the Archives, for instance only those Data Objects the User would have had access to in the computer-based information system the Data Objects originated from.

This presents a problem, however, as traditional Archives only store Data Objects and do not store Objects and Relationships contained in the Identity Management System.

Consider archival of e-mail as an example:
1. E-mails are sent to one or more e-mail addresses, which are recorded as attributes in the e-mail messages;
2. Each address belongs (is related to) exactly one Destination, mail sent to this address is delivered to this Destination. A Destination may have more than one e-mail address associated with it.
3. A Destination is either an Inbox or a Mailing list.
4. An Inbox is a Store were e-mail messages are held, ready for access by all Users who directly or indirectly have access to this Inbox.
5. A Mailing list is a group of Destinations or Addresses. Messages sent to a Mailing list are delivered to all Destinations and Addresses which are members of this Mailing list.
6. Users and Groups are assigned Access Rights to Mailboxes, the Stores which hold the actual e-mail messages.

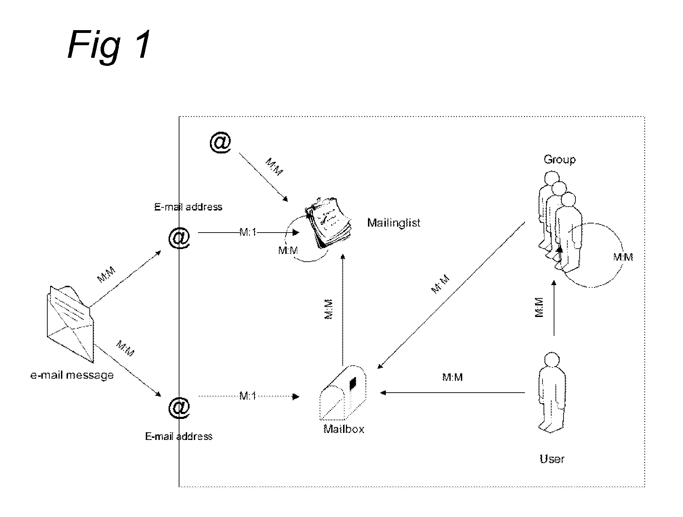

Figure 1 shows the different objects and their relations. Each relation is marked as either one-to-one (1:1), one-to-many (1:M), many-to-one (M:1) or many-to-many (M:M). The Objects and Relations contained in the Identity Management System are contained in the area indicated with rectangle and as such are not stored in a traditional Archive. As is evident from Figure 1, to determine a User's Access Rights on an e-mail message contained in the Store, these Objects and Relationships are required.

One solution may be to query the Identity Management System for these Objects and relationships when the User accesses the Archive(s), however as the contents of the Identity Management Systems change over time, this leads to increasingly incorrect results as time passes.

Consider the following example:
1. At time to, two employees, E1 and E2, join an organization with e-mail domain "example.com". Both have "Smith" as their last name. The email address smith@example.com gets assigned to employee E1.
2. At t₁, a message M1 addressed to smith@example.com is received and delivered to the Inbox of E1.
3. At t₂, E1 changes his or her last name to "Jones". The address smith@example.com is now available and, upon request, is assigned to E2.
4. At t₃, an e-mail message M2 is received and delivered to the Inbox of E2.
5. At t₄, E2 accesses the Archive. Because the Identity Management System is queried to determine Access Rights, E2 can access both M1 and M2, even though only M2 should be accessible.

The above example demonstrates that information in the area indicated with the rectangle may get lost over time.

### Summary of the invention

In order to solve the problems identified above, the present invention provides a system as defined in claim 1. A method, a computer program product and a data carrier comprising such a computer program product are defined in separate independent claims.

The invention is based on the insight that, in order to provide User access to Archives which contain Data Objects stored over time while limiting access in the same way, or a similar manner, as was done in the computer-based information system the Data Objects originated from, the State over time of the data in the Identity Management System will also need to be archived.

### Brief description of the drawings

The invention will now be explained in detail with reference to some drawings that are only intended to show embodiments of the invention and not to limit the scope. The scope of the invention is defined in the annexed claims and by its technical equivalents.

The drawings show:
Figure 1 shows different objects and relations in an email system.
Figure 2 shows a computer system arranged as an archive system to perform the method according to the invention.
Figure 3 shows a Historical User Database Entity Relation Diagram.

### Detailed description of embodiments

Now, the solution of the present invention to the problem described in the introduction of this specification will be described in detail with reference to an embodiment. Briefly stated, in accordance with the present invention, an environment is devised where information from one or more Identity Management Systems of one or more computer-based information systems is archived in a Historical User DataBase (HUDB) in an archive system together with the archived Data Objects. Access to the archived information is facilitated and regulated by a dedicated software system, as will be explained in detail hereinafter.

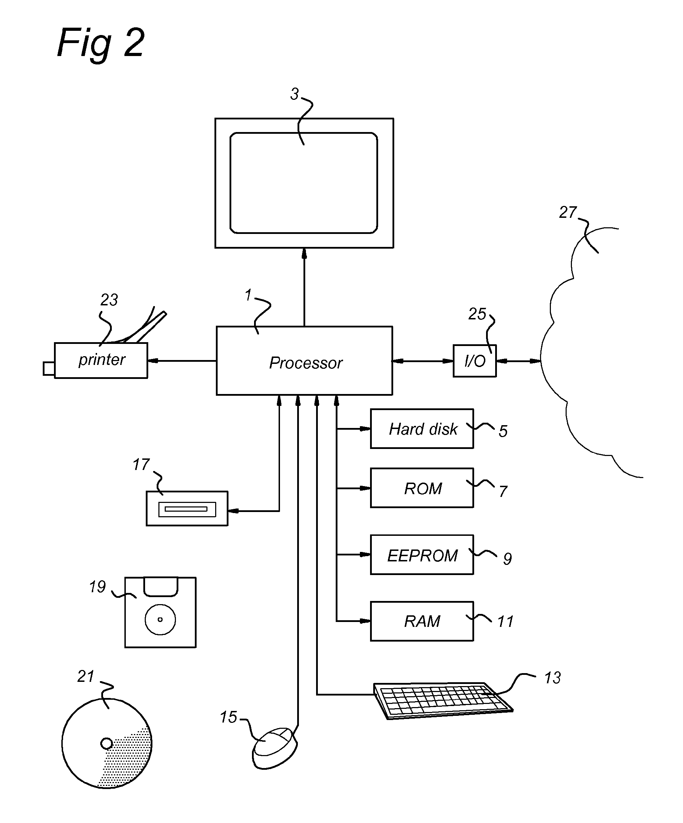

Figure 2 shows an embodiment of a computer system able to operate as such an archive system and to perform the method according to the invention.

The arrangement comprises a processor 1 for carrying out arithmetic operations. The processor 1 is connected to a plurality of memory components, including a hard disk 5, Read Only Memory (ROM) 7, Electrically Erasable Programmable Read Only Memory (EEPROM) 9, and Random Access Memory (RAM) 11. Not all of these memory types need necessarily be provided. Moreover, these memory components need not be located physically close to the processor 1 but may be located remote from the processor 1.

The processor 1 is also connected to units for inputting instructions, data etc. by a user, like a keyboard 13, and a mouse 15. Other input units, such as a touch screen, a track ball and/or a voice converter, known to persons skilled in the art may be provided too.

A reading unit 17 connected to the processor 1 is provided. The reading unit 17 is arranged to read data from and possibly write data on a data carrier like a floppy disk 19 or a CDROM 21. Other data carriers may be tapes, DVD, Blu Ray disks, memory sticks, etc. as is known to persons skilled in the art. The data carrier may be provided with a computer program product comprising instructions and data arranged to be read by the processor 1 and, after being read, allowing the processor 1 to perform a method in accordance with the invention. Such a computer program product may then be loaded in one of the memory components 5, 7, 9, 11. However, such computer program product may, alternatively, be downloaded via the telecommunication network 27.

The processor 1 may be connected to a printer 23 for printing output data on paper, as well as to a display 3, for instance, a monitor or LCD (Liquid Crystal Display) screen, a plasma display panel, or any other type of display known to persons skilled in the art.

The processor 1 may be connected to a communication network 27, for instance, the Public Switched Telephone Network (PSTN), a Local Area Network (LAN), a Wide Area Network (WAN), the Internet, etc. by means of an I/O unit 25. The processor 1 may be arranged to communicate with other communication arrangements through the network 27.

The processor 1 may be implemented as stand alone system, or as a plurality of parallel operating processors each arranged to carry out subtasks of a larger computer program, or as one or more main processors with several sub-processors. Parts of the functionality of the invention may even be carried out by remote processors communicating with processor 1 through the network 27.

### Historical User Database

One (or more) of the memories referred to above stores a Historical User DataBase (HUDB) which contains:
1. Representations for all Objects from one or more Identity Management System(s) over time. Each Representation contains a Begin Date and End Date, respectively representing the moment in time when an Object first appeared in the originating Identity Management System and the moment in time it was removed from the originating Identity Management System;
2. Representations of all Relations between these Objects in the Identity Management System(s) over time; Each Representation contains:
   ■ References to two Representations of an Object described in (1), being the Objects which have a Relation to each other;
   ■ a Begin Date and End Date, respectively representing the moment in time when the Relation was first established between two Objects and the moment in time when the Relation was removed;
   ■ Optionally an Annotation describing the nature of the Relation between the Objects.
3. A list (or lists) of Access Rules, where an Access Rule consists of:
   ■ A Holder (or Holders), being either a User Object or a Group Object present in a list or lists described in (1);
   ■ A Target consisting of an Object present in (1) or a defined Special Target;
   ■ A Right, being a specific level of Access to Data Objects stored in the Archive(s).

An Access Rule has the effect of granting the Holder the specified access to Data Objects stored in the Archive which are either directly associated with the specified Target, or are indirectly associated with the specified Target through one ore more Relations (2).

All access to Data Objects within the Archive(s) is based on Access Rights and Relations. A User may only manipulate a Data Object if he has both the required Access Right to a Target and that Target is in some (direct or indirect) way related to the Data Object.

Rights can either *grant* a specific level of Access to Data Objects or they can *deny* a specific level of Access to Data Objects.

Rights can be of the same granularity as in the originating computer-based information system, or they can be of greater or lesser granularity. As an example, Rights for an archiving system for e-mail messages may be one or more of the following:
1. Header Right, a Holder may only access certain Message Headers such as From, To, Date.
2. Subject Right, a Holder may view the Subject header of the Message
3. Body Right, the Holder may view the contents of the message body
4. Attachments Right, a holder may view the contents of any message attachments
5. Download Right, a holder may download the entire message from the Archive it is contained in.

In cases where the Target of an Access Rule is a User or Group, another Access Right is defined, the Impersonate Access Right. This gives the Holder the possibility to manipulate Data Objects in the Archive(s) as if the Holder had the Access Rights of a User of the Holder's choosing who is a Target of the Access Rule in question (either directly, or indirectly through Group membership). Access Rules are cumulative, meaning that a User's Rights on a Data Object are the sum of all Rights in Access Rules which confer a Right for the User in question on the Data Object in question.

Anyone skilled in the art of the subject matter will realize that the Targets for Access Rules need not necessarily always refer to representations of Objects from one or more sources, it would also be possible to have the Target be an Object defined in the archiving system whose purpose it is to define a subset of all the Data Objects present in the Archive(s). This is an example of a Special Target.

Examples would be a query which defines a subset of Data Objects. An Access Rule with such a query as Target would then have the effect of conferring the specified Access Right to the result set defined by that query to the Holder. Such a target type and query is considered to be within the scope of this application.

Another Special Target is the 'ALL' Target, which denotes the set of all Data Objects contained in the Archive(s).

Because all access to Data Objects goes through Access Rules, in order to give a User a certain Access Right to all Data Objects which are in some way associated with that User, it suffices to give the User the required Access Right on the representation of that User in the HUDB. In other words, it suffices to define an Access Rule where the User is both Holder (directly or indirectly) and Target (directly).

Typically each User will be allowed to access Data Objects that are associated with that User. In cases where there is a large number of users, this will lead to a large number of access rules. To reduce the number of Access Rules required in this scenario, a Special Target 'USER_SELF' is introduced. When this Target is used in an Access Rule, the User who is (either directly or indirectly) defined as the Holder will obtain the defined Access Right on the User him or her self.

### Archives

The system contains one or more Archive(s) of Data Objects which contain or have been enriched with Attributes so that they can be coupled with Objects from the Historical User Database (HUDB).

### System

The system according to the invention provides regulated access to the archives and comprises:
1. A Historical User Database (HUDB)
2. One or more Archive(s) of Data Objects
3. Storage components: a software component or several software components that place(s) Data Objects into Archive(s) based on certain rules and which records (possibly amongst others) attributes related to access control to that Data Object in the same Archive(s), coupled in some way with the Data Object(s) in question
4. Filler components: a software component or several software components that populate(s) the HUDB with information on Objects and their Relations from one or more Identity Management Systems and mirror(s) any changes to these Objects or Relations in the HUDB
5. Management component: a software component or several software components that facilitate(s) the creation, modification or removal of Access Rules
6. User Interaction component: a software component or several software components that allow(s) Users to search the Archive(s) for Data Objects, view, manipulate and optionally remove Data Objects from the Archive and which enforce the defined Access Rules during all User interaction with the Archive(s) and the Data Objects contained therein.

When Users manipulate Data Object(s) in The Archive(s), the Access Rules defined must be enforced. To enable this enforcement, Access Rules and Relations must be resolved to determine a User's Access Rights on each Data Object in particular.

Two strategies are possible for the resolution of Relations: Resolve at time of storage or at time of manipulation.

In the case of resolution at storage time, when the Data Object is stored in the Archive(s), the Storage component records the identifiers from the HUDB for each Object from the originating Identity Management System(s) that the Data Object has a (direct or indirect) Relation with through one or more Relations defined in the HUDB.

When the User wishes to manipulate a Data Object, the User Interaction component need only determine:
1. Which Objects from the HUDB the User has Access Rights to through virtue of that Object being listed as a Target in an Access Rule where the User is (directly or indirectly) listed as a Holder;
2. Which of these Objects determined in step 1 have been recorded in the Archive(s) as being related to the Data Object under consideration.

In the case of resolution at manipulation time, the User Interaction Component needs to perform the step of determining all of the Objects from the HUDB the Data Object under consideration has a (direct or indirect) Relation with through one ore more Relations defined in the HUDB before it performs the two steps described above.

Resolution at storage time leads to a (slightly) increased archive size but to speedier manipulation of Data Objects, whereas for resolution at manipulation time the inverse holds.

### Technical Description of the Solution

### Historical User DataBase (HUDB)

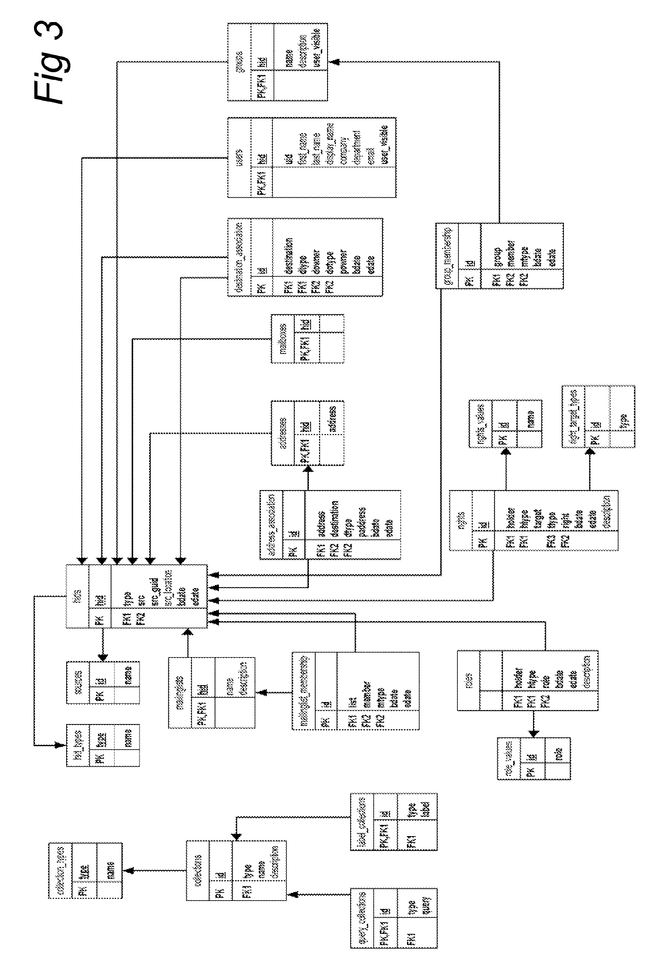

The HUDB consists of a database with a table structure similar to figure 3. The database is stored in one of the memories shown in figure 2. Each table and its columns will be discussed in turn.

In figure 3, the abbreviation "PK" stands for Primary Key, denoting (as will be apparent to anyone skilled in the art) that the specified column is a primary key for that table, with a primary key being a column in a table whose values uniquely identify the rows in the table. A primary key value cannot be empty or null.

Furthermore, the abbreviation "FK" stands for Foreign Key, denoting (as will be apparent to anyone skilled in the art) that the value for that column in each row of the table contains the primary key from another table in the database, thereby representing a relationship between the two rows. A foreign key value cannot be empty or null and its value must exist as a primary key value in the table it is a foreign key into.

### Tables representing Objects

### hids

### Table description:

Each Object in Identity Management System is represented in the HUDB as a Historical Identity (hid). The hids table contains the attributes all hids share. A separate table is maintained for each category of Object (hid) containing attributes specific to that category of Objects.

### hid

This columns contains a unique identifier for each hid in the HUDB. When referencing hids, this unique identifier is used.

### type

This column contains an identifier for the type of hid (the category of Object) that this row contains. The type specific sub table associated with this type will contain type specific attributes for this hid. Each value present in this column must be present in the id column of the hid_types table.

### source

This column contains an identifier for the Source that the Object represented in this row originated from. Each value in this column must be present in id column of the sources table. Recording the source of a hid means that Filler components can ensure that they only manipulate hids which originated in the Source they are monitoring.

### src_guid

This column contains the globally unique identifier ("guid") of the Object this hid refers to. This is an attribute in the Source which does not change over the lifetime of the Object. It is used by Filler components to uniquely identify Objects when synchronizing the state of the archive data in the HUDB with the state of the Identity Management System based on synchronization data from the Identity Management System. By such synchronization, the state over time of the data in the Identity Management System is also archived. This will provide Users access to Archives which contain Data Objects stored over time while limiting access in the same way, or a similar manner, as was done in the computer-based information system the Data Objects originated from.

As state may be synchronized at regular intervals, attributes of an Object in the Source may change between two synchronizations, including the location of the Object in the Source. A Filler component must be able to distinguish between an existing Object being moved or modified between two synchronization events and an existing Object being deleted and a new (similar) Object being created in the same location.

Because this issue is not unique to Filler components but afflicts all software which relies on the contents of the Identity Management Systems, almost all Identity Management Systems offer some kind of globally unique identifier that is set when an Object is created and does not change over the lifetime of that Object.

Whether a Source assigns guid's to Objects and which attribute contains the guid is the responsibility of the Filler component for that type of Source. The value in the src_guid column is only used by Filler components during synchronisation and is not used by the HUDB itself or by other software components.

### src_location

This column contains the location within the originating Identity Management System where the Object that this hid refers to can be found.

This attribute is recorded to speed up synchronization: Filler components can easily and quickly locate the original Object, instead of having to execute a potentially slow search operation on the originating Identity Management System to locate the Object by its guid.

If an Object has been moved between synchronizations, locating the object based on this column's value will fail and the Filler component will have to execute a search operation.

### bdate

This column contains the date (both the date and time, in a suitable granular format) that denotes the moment that the Object this hid refers first appeared in the originating Identity Management System.

### edate

This column contains the date (both the date and time, in a suitable granular format) that the Object that this hid refers to was removed from the originating Identity Management System.

It is important to note that rows are *never* removed from the hids table (and the sub tables for specific hid types), when an Object is deleted from the originating Identity Management System, the row in the hids table is not removed, rather its edate value is set.

If an Object still exists in the originating IMS, the value for this column will be an implementation dependant value to denote this fact (null, infinity, or the maximum value possible for the data type used to record the date values).

### hid types

### Table Description:

This table contains the type values and description of each type of hid which the HUDB discerns. The following types are possible:
1. address
2. mailinglist
3. inbox
4. user
5. group

Although anyone skilled in the art will be aware that other types may also be possible. **type**

Value denoting the type

### name

Textual (human readable) name for this type of hid, i.e. 'address', 'user'.

### sources

### Table description:

This table contains a unique name for each Source, coupled with a numerical source identifier which is used in other tables. Each Filler component knows the name of the Source(s) it is monitoring and can use this lookup table to determine which hids in the HUDB it is responsible for.

### id

Numerical is for the source, used in other tables. Each value must be unique.

### name

Name for the source, textual. Must be unique.

### addresses

### Table Description:

Contains attributes for hids of type 'address'.

### hid

Unique id of this hid, references column hid in table hids.

### address

The address value (i.e. user@domain.com).

### mailboxes

### Table description:

Contains attributes for hids of type 'mailbox'. At present, no additional attributes are recorded for mailboxes, which is why this table has no other rows other than hid.

### hid

Unique id of this hid, references column hid in table hids.

### mailinglist

### Table description:

Contains attributes for hids of type 'mailinglist'.

### hid

Unique id of this hid, references column hid in table hids.

### name

This column contains the name of this mailinglist (may be empty).

### description

This column contains an optional descriptive text for this mailinglist (may be empty).

### users

### Table description:

Contains attributes for hids of type 'user'.

### hid

Unique id of this hid, references column hid in table hids.

### uid

User id for this user in the originating Source. Used to map users to their hid when they login to the User Interaction Component, as at any one time a user id will be unique in that Source (a user id may belong to more than one hid when viewed over time, but at any one time it will belong to only hid from that Source. When logging in, that any one time becomes the present).

### first_name

Optional first name of this user hid. Used to display the hid in a human readable manner when users interact with the hid.

### last_name

Optional last name of the user represented by this hid. Used for display purposes.

### display_name

Optional display name of the user represented by this hid. Used for display purposes.

### company

Optional company name. Used for display purposes.

### department

Optional department name. Used for display purposes.

### e-mail

Optional e-mail address. This enables software components to send e-mails to the user (notifications for instance), as the user's regular e-mail address may not be subject to archiving and therefore would not be in the hudb.

### groups

### Table description:

Contains additional attributes for hids of type 'group'.

### hid

Unique id of this hid, references column hid in table hids.

### name

Optional name of the group, used for display purposes.

### description

Optional description of the group, used for display purposes.

Tables representing Relations

These tables represent the Relations between Objects in the Source(s).

### address_association

### Table description:

This table describes the relations between addresses, and their destination. At any one time, an address is associated with at most one destination.

### id

Unique numerical id representing this association.

### address

Value from the hid column of the hids table for a hid of type address, determining the address this relation applies to.

### destination

Value from the hid column of the hids table for a destination hid (a hid of type mailbox or mailinglist) that is relation applies to.

### dtype

Value from the type column of the hids table for the hid this relation applies to, determining the type of destination (mailbox or mailinglist).

### paddress

Boolean value indicating that this address is the primary address for this destination. Used for display purposes, as some destinations (mailbox) do not have any display attributes.

### bdate

This column contains the date (both the date and time, in a suitable granular format) that denotes the moment that the Relation between these Object first appeared in the Source.

### edate

This column contains the date (both the date and time, in a suitable granular format) that denotes the moment that the Relation between these Object was removed in the Source.

As with hids, rows from tables describing Relations are *never* removed. Rather, when the Relation is removed from the Source, the edate value for that row is set.

If a Relation still exists in the Source, the value for this column will be an implementation dependant value to denote this fact (null, infinity, or the maximum value possible for the data type used to record the date values).

### destination association

### Table description:

This table describes the Relations between destinations (mailboxes) and their owners (users or groups). An owner is a user or group who is associated with a destination.

One destination can have multiple owners, and one owner can be associated with multiple destinations. Each destination - owner relation is described in one row of this destination_association table.

### id

Unique numerical id for this relation.

### destination

Value from the hid column of the hids table for the destination hid (a hid of type mailbox), determining the destination this relation applies to.

### dtype

Value from the type column of the hids table for the hid this relation applies to, determining the type of destination (mailbox).

### downer

Value from the hid column of the hids table for the owner hid (a hid of type user or group), determining the owner this relation applies to.

### dotype

Value from the type column of the hids table for the owner hid this relation applies to, determining the type of destination owner (user or group).

### powner

Boolean value indicating whether this owner is the primary owner of the destination this relation applies to. Used for display purposes.

### bdate

The moment in time this relation first appeared in the Source (see also YY).

### edate

The moment in time this relation was removed from the Source, set to null or a suitably large value if the relation currently still exists (see also YY).

### mailinglist membership

### Table description:

This table describes mailing list membership, meaning which addresses or destinations were members of which mailing lists over time. A mailing list can have multiple members, and a member (address, mailbox or mailinglist) can be a member of multiple mailing lists simultaneously.

### id

Unique numerical id for this relation.

### list

Value from the hid column of the hids table for a hid of type 'mailing list', determining which mailing list this relation applies to.

### member

Value from the hid column of the hids table for a hid of type 'address', 'mailbox' or 'maíling list', determining the member hid this relation applies to.

### mtype

Value of the type column for the member hid, determining the type of member.

### bdate

The moment in time this relation first appeared in the Source (see also address_association - bdate).

### edate

The moment in time this relation was removed from the Source, set to null or a suitably large value if the relation currently still exists (see also address_association - edate).

### groups membership

### Table description:

This table describes group membership, meaning which users or groups were members of which groups over time. A group can have multiple members, and a member (a user or group) can be a member of multiple groups simultaneously.

### id

Unique numerical id for this relation.

### group

Value from hid column from the hids table for a hid of type 'group', determining the group this relation refers to.

### member

Value from the hid column of the hids table for a hid of type 'user' or 'group', determining the group member this relation refers to.

### mtype

Value from the type column from the hids table for the member hid, determining the type of member (user or group) this relation refers to.

### bdate

The moment in time this relation first appeared in the Source (see also address_association - bdate).

### edate

The moment in time this relation was removed from the Source, set to null or a suitably large value if the relation currently still exists (see also address_association - edate).

### Tables representing Access Rights

### rights

### Table description:

This table describes the Access Rules defined in the system. It records which Holders have which Access Rights on which Targets.

### id

Unique numerical id for this Access Rule.

### holder

Value from the hids column of the hid table for a hid of type 'user' or 'group', determining the Holder of this Access Right.

### htype

Value from the type column from the hids table for the holder hid, determining the type of holder (user or group) this Access Rule applies to.

### target

The id of the Target this Access Rule applies to. This is either a value from the hid column in the hids table when the target is of type 'hid', or some other value if the target is of a non-hid type.

### ttype

Value from the id column of the table right_target_types, denoting the type of Target this Access Rule applies to.

### right

Value from the id column of the table right_values, denoting the Access Right that is granted by this Access Rule.

### bdate

The moment in time this Access Rule was created.

### edate

The moment in time this Access Rule was removed.

### table rights_values

### Table Description:

This table contains the different Access Rights defined in the system. It is up to the software components to enforce these Access Rights.

### id

Unique numerical id of this Access Right.

### name

Textual name of the Access Right, used for display purposes.

### table right_target_types

### Table Description:

This table contains identifiers for the different kinds of Right Targets. Examples are:
1. hid, the Target is a hid from the hids table
2. all, the Target is the special 'all'target, meaning all Data Objects in the Archive(s)
3. user_self, the Target is a placeholder tat will be substituted for the hid of any user who is (directly or indirectly) a Holder of this Access Rule (see page 7 for an explanation of user_self).

### id

Unique numerical id for this target type.

### type

Textual name of the target type, used for display purposes.

### Software Components

The software components are stored in one of the memories shown in figure 2. They allow the processor 1 to perform a specific task or function as specified below.

### Storage Component(s)

The Storage components place Data Objects in the Archive(s), recording relevant details to enable authorization of Access based on information from the HUDB. At a minimum this must include those attributes that link this Data Object to one or more Objects in the HUDB (e-mail addresses in the case of an e-mail, for example) Optionally, Access Rights defined in the originating computer based information system may also be recorded (Access Control Lists in the case of a File, for example)

If the implementation has chosen the 'at storage time' approach to resolution of Relations, the Storage Component must also determine each Object in the HUDB that the Data Object is (directly or indirectly) related to through one or more relations defined in the HUDB and must record identifiers for these Objects (obtained from the HUDB) with the Data Object in the Archive(s).

### Filler Component(s)

The Filler component(s) are responsible for updating the contents of the HUDB with any changes to the contents relevant to the archiving system of the Identity Management System(s) (Source) that they are monitoring.

Depending on the implementation, each Filler component may periodically check each Source for modifications, or it may be notified by the Source of any modifications as they occur.

As was described in the structure of the HUDB, each Source has a unique identifier within the HUDB, and each Filler component has been configured with the identifier of each Source that it is monitoring. In this way, each Filler component can easily identify any and all Objects in the HUDB that originated from any Source that it is monitoring, preventing one Source from erroneously causing modifications to an Object which originated from another Source because of a conflict of properties of the Object.

When an Object or Relation ceases to exist in the Source, it is not removed from the HUDB, rather the end date for that Object or Relation is set.

If any properties of an Object or Relation are modified, the relevant attribute of the Object or Relation's representation is updated in the HUDB.

To anyone skilled in the art of the subject, it is apparent that rather than updating the properties of an Object or Relation, thereby losing their previous values, it would be trivial to extend the representation of an Object or Relation with a numerical field signifying its version and to record the new property values in a representation with a higher version, using the begin date and end date of each version to signify the period in time that the Object's properties were in the state as recorded in that version of the Object's representation in the HUDB. This modification is considered to be within the scope of this application.

### Management component(s)

The Management component(s) allow Users with a sufficient level of access to the application to manipulate Access Rules. Manipulation includes:
1. Listing defined Access Rules
2. Adding Access Rules
3. Modifying Access Rules
4. Removing Access Rules

With regards to removing access rules, it is up to the implementation of the Management Component(s) whether removal of an Access Rule leads to the Access Rule's representation in the HUDB being removed, or whether the end date of the Access Rule is set, signifying that the Access Rule is no longer active, but recording the existence of the Access Rule for auditing purposes.

### User Interaction components

The User Interaction component(s) allow Users to Manipulate Data Object(s) contained in the Archive(s), where Manipulation includes:
1. Searching for Data Object(s) in the Archive(s) which match certain criteria
2. Viewing attributes or contents of Data Object(s) in the Archive(s)
3. Retrieving Data Object(s) from the Archive(s)
4. Modifying attributes or contents of Data Object(s) in the Archive(s)
5. Removing Data Object(s) from the Archive(s)
6. Adding Data Object(s) to the Archive(s)

User Interaction components may utilize a Graphical User Interface or a command line interface.

It is the responsibility of the User Interaction component to enforce the Access Rules defined in the HUDB during all User manipulation of Data Object(s) in the Archive(s) User identification and authentication is also the responsibility of the User Interaction Component(s). For this, the User Interaction component(s) utilize one or more Identity Management System(s) which are used as Sources for the HUDB (through one or more Filler components) as any User using a User Interaction component will by definition be an active User and will therefore be present in at least one Source.

In this way, the burden of providing user identification and authentication is left with the originating Identity Management System(s).

It is left to the implementation of the User Interaction components to handle a User interacting with the User Interaction component being present in more than one originating Identity Management System.

### Applications

The following is a list of possible applications of the present invention. However, it is to be understood that other applications are within the scope of the annexed claims:
- Email Archive
- File Stores and Archives
- Instant Messaging Archives
- Archive of telephone conversations and voicemails

### Benefits

### The invention as explained above has at least the following advantages:

- User Access to Archives becomes possible, instead of access being limited to a subset of Users within an organization. Without this System, access can only be granted to:
   o Individual Data Objects, which makes assignment of Access Rights infeasible unless the number of Data Objects is very small, which defeats the purpose of an Archive
   o Values for Attributes of Stored Data Objects (i.e. e-mail addresses for stored e-mail messages), which may lead to incorrect results (see example)
- With this System, Access Rights can be granted using any intermediate Object which was stored at one time in the Identity Management System(s), meaning far fewer Access Rules to define even in case of very large Archives.
- Access Right assignment to the Archive(s) is similar to Access Right Assignment in the computer-based information system the Archive is populated from, which:
   o By definition means it meets the requirements of the organization using the Archive;
   o Means that its workings are familiar to administrators of the Access Rights on the source computer-based information system, which leads to reduced effort required to administer the Access Rights on the Archive.

### Terms used in the specification

| | |
|---|---|
| **Person** | Represents a human with access to the system |
| **Group** | Collection of Persons or other Groups |
| **Role** | Represents a function with the organization that owns the system |
| **Identity Management System** | Store of Persons, Groups and their Roles, Relations and access rights on Data Objects, possibly using other Objects such as (but not limited to): (e-mail) addresses, inboxes, mailing lists, etc. |
| **Security Management System** | System that enforces access rights assigned to relationships |
| **Data Objects** | Files, email messages, text messages, electronic representation of voice-mails, mp3's etc |
| **Relationships** | Based on some criteria/attribute, Data Objects are related to items from the Identity Management System |
| **Archive** | Backup store of Data Objects, possible including some form of version control. |
| **HUDB** | Historical User database, containing details over time from the Identity Management System and access rights to the archive. |
| **Holder** | A Person or Group that has access rights to a Data Object |

## Claims

1. An archive system comprising a processor (1) and a memory (5; 7; 9; 11) connected to said processor (1), said memory (5; 7; 9; 11) storing one or more software components and storing archive data relating to data stored in one or more computer-based information systems, said one or more computer-based information systems comprising an Identity Management System and a Security Management System, said Security Management System enforcing access rights of at least one of individual persons and groups of persons to said data stored in said computer-based information system and said Identity Management System storing said access rights, identification data identifying said individual persons and said groups of persons and relation data regarding relations between said at least one of individual persons and groups of persons and said data, wherein said software components are arranged to provide said processor (1) with the capacity to perform the following actions:
• To receive said data from said one or more computer-based information systems;
• To store said data as archive data in said memory, and
• To synchronize the state of said archive data in said archive system with state over time of said access rights, identification data and relation data in said Identity Management System in accordance with synchronization data received from said Identity Management System.

2. The archive system according to claim 1, wherein said memory comprises:
a. Representations for objects from the Identity Management System over time, each representation comprising a begin date and end date, respectively representing a moment in time when an object first appeared in the Identity Management System and the moment in time it was removed from the Identity Management System;
b. Representations of relations between these objects in the Identity Management System over time; each representation comprising:
i. References to two representations of an object described in the Identity Management System, being the objects which have a relation to each other;
ii. A begin date and end date, respectively representing the moment in time when the relation was first established between two objects and the moment in time when the relation was removed;
c. One or more lists of access rules, where an access rule comprises:
i. One or more holders, being either a user object or a group object present in one or more lists described in the Identity Management System;
ii. A right, being a specific level of access to data objects stored in the archive system.

3. The archive system according to claim 1 or 2, wherein said software components comprise:
a. One or more storage components which places data objects into said archive system based on predetermined rules;
b. One or more filler components which populates the memory with information on objects and their relations from one or more Identity Management Systems and mirrors any changes to these objects or relations in the memory;
c. One or more management component which facilitates creation, modification or removal of access rules;
d. One or more user interaction components which allows users to search the memory for data objects, view, manipulate and optionally remove data objects from the memory and which enforce the access rules during all user interaction with the memory and the data objects stored therein.

4. Method of operating an archive system comprising a processor (1) and a memory (5; 7; 9; 11) connected to said processor (1), said memory (5; 7; 9; 11) storing one or more software components and storing archive data relating to data stored in one or more computer-based information systems, said one or more computer-based information systems comprising an Identity Management System and a Security Management System, said Security Management System enforcing access rights of at least one of individual persons and groups of persons to said data stored in said computer-based information system and said Identity Management System storing said access rights, identification data identifying said individual persons and said groups of persons and relation data regarding relations between said at least one of individual persons and groups of persons and said data, wherein said method comprising the following actions:
• receiving by said processor said data from said one or more computer-based information systems;
• storing by said processor said data as archive data in said memory, and
• synchronizing by said processor the state of said archive data in said archive system with state over time of said access rights, identification data and said relation data in said Identity Management System in accordance with synchronization data received from said Identity Management System.

5. Computer program product arranged to be loaded by a archive system comprising a processor (1) and a memory (5; 7; 9; 11) connected to said processor (1), said memory (5; 7; 9; 11) storing one or more software components and storing archive data relating to data stored in one or more computer-based information systems, said one or more computer-based information systems comprising an Identity Management System and a Security Management System, said Security Management System enforcing access rights of at least one of individual persons and groups of persons to said data stored in said computer-based information system and said Identity Management System storing said access rights, identification data identifying said individual persons and said groups of persons and relation data regarding relations between said at least one of individual persons and groups of persons and said data, wherein said computer program product allows said processor to perform the following actions:
• To receive said data from said one or more computer-based information systems;
• To store said data as archive data in said memory, and
• To synchronize the state of said archive data in said archive system with state over time of said access rights, identification data and said relation data in said Identity Management System in accordance with synchronization data received from said Identity Management System.

6. Data carrier comprising a computer program product as defined in claim 5.
